# EUROPEAN PATENT APPLICATION

(11) **EP 1 335 289 A1**
(43) Date of publication of application: **13.08.2003**
(21) Application number: 02002786.8
(22) Date of filing: 07.02.2002
(51) Int. Cl.: G06F 11/00, H04L 12/28, H04Q 7/32

(54) **Method for software downloads in a radio communications system**

(71) Applicant: SIEMENS AKTIENGESELLSCHAFT, 80333 München (DE)
(72) Inventor: Dillinger, Markus, 81737 München (DE); Luo, Jijun, 81549 München (DE); Mohyeldin, Eiman, 81476 München (DE)

(57) **Abstract**

Method for software downloads in a radio communications system, wherein a user equipment (UE) changes ist affiliation from a first base station (Node B) to a second base station (Node B) and selectively receives the missing part of a session from the base stations (Node B) repeatedly broadcasting a download stream.

## Description

This invention describes the management of downloads in a cellular network with broadcast and dedicated bearer services. It is based on the circular broadcast concept described in the german patent application DE 10156009 and introduces novel details as e.g. packet numbering scheme with system control information carrying the software download (SD) status to improve the efficiency in fragmented software download scenarios due to e.g. handovers in wireless networks. The push-services will play an important roll in future wireless network operation, especially the users will participate more frequently in passively receiving information in the network. Software download using broadcast and multicast channels in mobile communication is one of the strongest methods to maintain spectrum efficiency if many users are involved. In the DE 10156009 a cell-grouping download method to reduce the co-channel interference has been proposed. The download data is split into fixed packet size according to the transport packet segmentation, where the mapping, interleaving and coding process from the transport layer to the physical layer is out of the question in this application. For each transport block, a packet number (index) is defined, the base station periodically broadcasts the data based on the chosen cell-grouping strategy. If the UE (user equipment) receives all the packets in a correct consequence until the "End Of Session (EOS)" signal is received, the download process is successfully completed. The assembling function described here must be supported by the UE as detailed in the following.

The invention is now described with reference to the following drawings:
Figure 1, Circular Cell-Grouping Manner
Figure 2, Illustration of Choosing between Common Channels and Dedicated Channels
Figure 3, FSM Illustration of Three Basic Modes
Figure 4, Frame Structure and Relationship between Data Channel and Control Channel
Figure 5, Case the UE Leave Download Mode
Figure 6, Performance Comparison between Packet Indexing and No Packet Indexing (Vehicular Speed 120km/h; Download Channel Rate: 15kbps)
Figure 7, Session, Packet and Service Relationships
Figure 8, Structure of Packet Indexing Scheme for Labeling Download Sessions
Figure 9, Protocol Stacks in RNC and UE
Figure 10, MSC for Jumping from Download Mode to the Connected Mode
Figure 11, A worst case of the alternative solution of judging the end of session

This part is a detailed part explaining the managament and packet indexing scheme for downloads. This part is organized as the following: first of all, the cell-grouping broadcast with traffic repetition is explained. With introducing the concept of download traffic classification, we establish the concept of download status and give the general idea to indicate the status of software downloads. Referring to the finished download probability in a single cell, an interworking between broadcast and dedicated resources must be established to finalise the downloads for all involved terminals. With proposing a protocol for handling fragmented downloads, we introduce new information elements to be transferred between network and terminals. Further, we introduce a new terminal state (download state), which complements the well-known idle and connected mode in 3GPP (3^{rd} Generation Partnership Project). Several alternatives for the protocol design and the needed information elements are outlined.

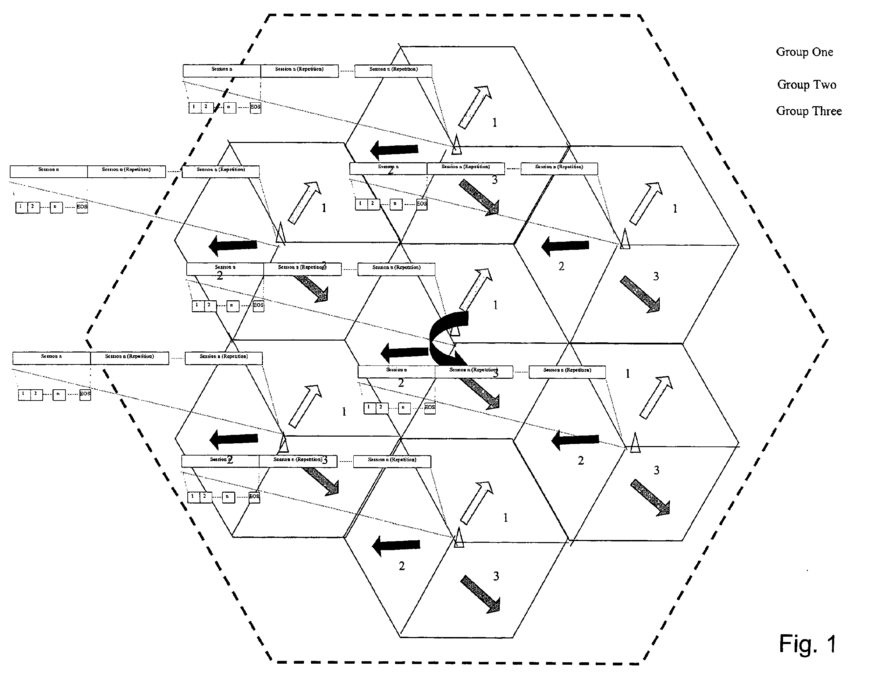

An efficient cell download procedure can be organized in a circular manner, shown in Figure 1. The downloaded software is repeatedly broadcast in each cell. Figure 1 is one snapshot illustrating the periodic repetition.

In order to explain the approach more clearly, some terms are defined first. A service is one general term defined for the UE-network communication. The network offers a service to the UE, e.g., a broadcast service, a dedicated service, etc. A Session is the type of data, e.g. one software module, one news package, etc., which is broadcast in the network. For each download session the session length can be defined. A packet is a fixed amount of data segmented from the session; each packet has its own index number in a session.
The download data can be classified into different classes according to the user profile characteristics. So, the download traffic classification means to classify the software download traffic into a finite number of classes, e.g. upgraded software, diving news, stock market information, information from different service providers, etc. With the indication of software download termination shown in the following, the concept of software download status is defined. The status of software download shows the current download traffic class and if the download process is finished or in repetition / ongoing status.

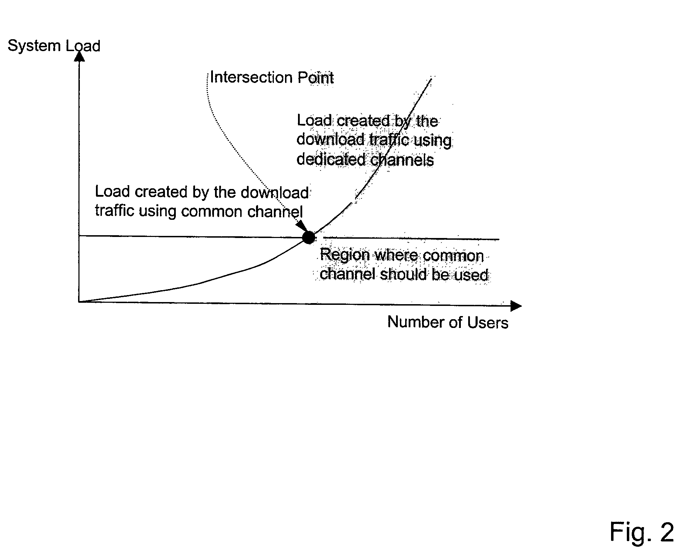

The reason to introduce a termination status is that a download session cannot always be repeated until a potential next session arrives. Due to nature of broadcast channels, a closed loop power control is not possible. The interference from the broadcast channel will highly influence the regular traffic. In case there is a certain small number of download users for a session, this session is not necessary to be transmitted over the broadcast channel any more. The following figure 2 shows the design principle to choose a broadcast channel for downloads. As the user number increases shown in X-axis in figure 2, the load increases exponentially. The load created by a broadcast channel is constant. The intersection point between these two curves is the threshold of chosing a broadcast channel or to carry out the downloads with dedicated channels. Whereas, the right side of the intersection point is the area, where a broadcast channel should be selected for the download.

It is necessary to introduce a third terminal state as shown below. We assume the UMTS/FDD system (Universal Mobile Telecommunications Systems/Frequency Division Duplex) as the system of interest. The idle mode, the connected mode, and the download mode are accessed by the terminal software.

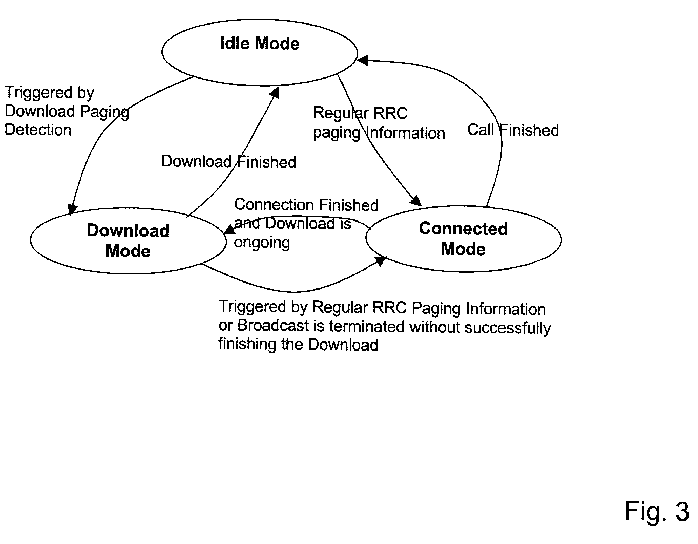

As shown in Figure 3, the software download mode listening to the broadcast channel is established as one further mode for the UE. It can be triggered by the detected download paging information (download status information) carried by a control channel introduced in later part. Once the download is finished, the terminal changes back to the idle mode. In the download mode, if a call is coming in, it is up to RRC (Radio Ressource Control) in the UE to interrupt temporarily the current download process and to switch to the connected mode. In case the connected mode is finished and the download is still not finished, the UE should jump back to download mode. If the download process through a broadcast channel is terminated according to principle shown in Figure 2, a connected mode should be established in order to finish the complete session as described later in more details.

The software download control channel (SCC) broadcasts the current status periodically. If the current status indicates an ongoing broadcast, the mobile user registered in this traffic class or willing to listen to this class will decode the software download data channel (SDC) and starts to download.

In addition, in order to have a higher probability to enhance the software download, a time shift between this control channel and the broadcast data channel should be also introduced.

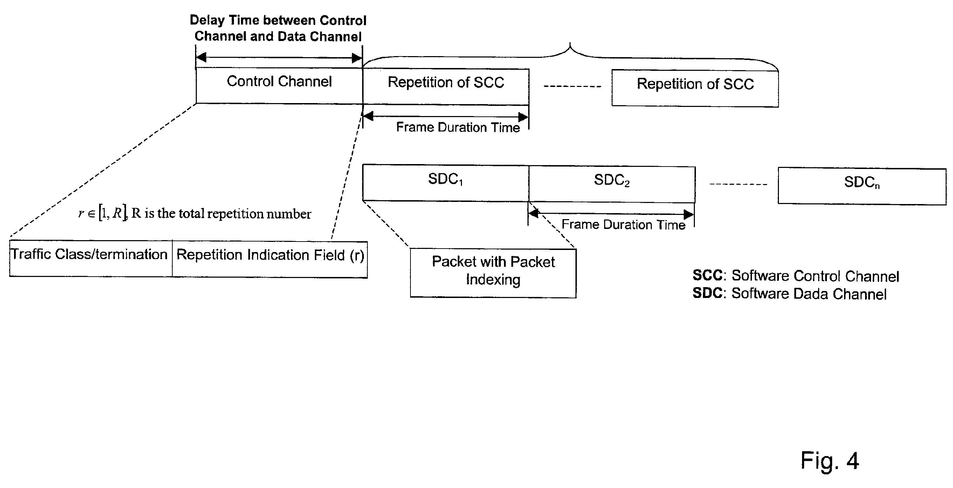

In Figure 4, two types of channels have been introduced, the software download control channel (SCC) and the software data channel (SDC); the data channel starts later than the control channel which indicates the current traffic class and repetition status. The user checks the control channel information periodically in order to save the power. If it detects that the traffic class carried by control channel is identical to its registered traffic class, it starts to download data via the data channel ― SDC. In case the downloading services should be terminated, the status of downloading termination should be shown in SCC, and the SDC should be released. The network triggers the termination signal by setting r=0.

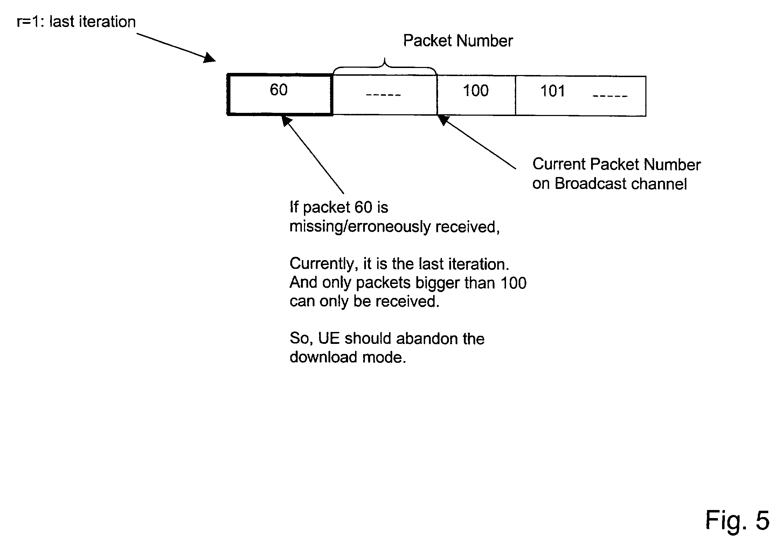

The field named repetition indication field is introduced after the traffic type field. The repetition indication field carries the current repetition number r of the session. It indicates the detailed current status of software download. It starts from the total repetition number R decided by the download management in the network. When one iteration of the download session is finished, the value r decreases by one. The UE reads the r-value and estimates the amount of remaining packets to be downloaded. The UE must abandon the current reception, if 1.): r equals to 1, 2.): if still a number of packets have not been correctly received for the current session and 3.): if the missing packet number is smaller than the current packet index on the broadcast channel. The UE must then switch to idle mode or connected mode immediately to save battery. Also, if the download was previously completed during an earlier repetition, the reception of the broadcast must be stopped. Figure 5 illustrates this scenario.

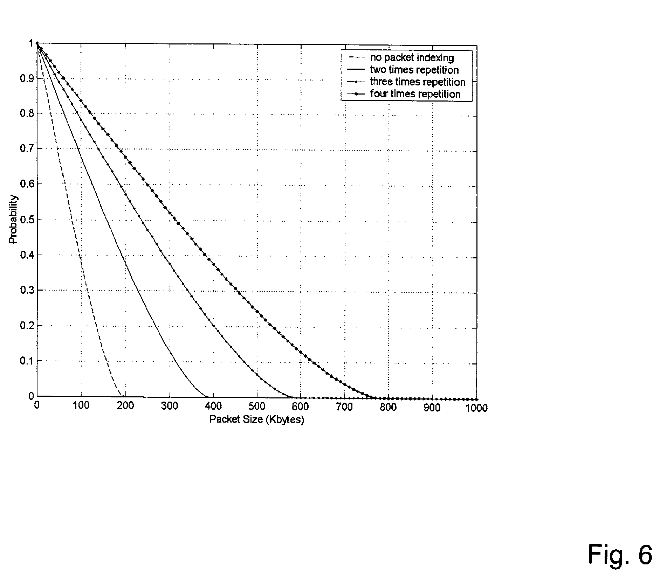

In order to support the mechanism of software download repetition, an indexing scheme is introduced. The no packet indexing case is identical to the single cell and no download repetition scenario. In order to compare the software download performance enhanced by the packet-indexing scheme, a simulation comparing the performance without packet indexing and the case with packet indexing was done. An upper bound is assumed that the segmentation is sufficiently small to support seamless handover. However, the performance is only one aspect of the system performance, so the download process cannot be always repeated. The party effect (well-known CDMA behaviour) caused by a longer time download process and the real time requirement for the waiting download traffic cannot allow the unlimited repetition of the download. The following part illustrates that the success rate for finished downloads is increased when repeating the braodcasts. As already mentioned this will lead to fragmented downloads in terminals and with the procedures introduced in this application, more finished downloads are accomplished, see figure 6.

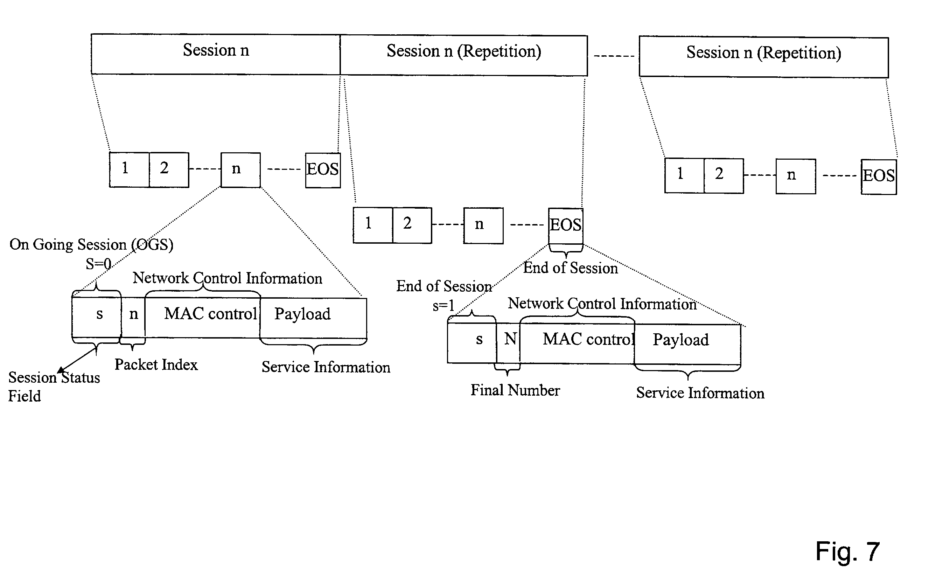

The SDC channel carries the packet indexes, session indexes, session status field, medium access control information and the download data, where the packet index and session index are of interest in this patent application. The framestructure containing the session and packet index is shown in figure 1 and figure 7.

In the download procedure, if the user stays in the cell without leaving the serving cell in the download phase, it will finish the download successfully if we assume the link quality to be good enough. However, the investigation of finished download probability with respect to the data size, vehicular speed and broadcast channel capacity shows that handovers during the download phase must be taken into account and fragmention will occur. By introducing a packet index and other information elements (e.g. r) combined with a suitable protocol we can finalise the fragmented downloads in terminals.

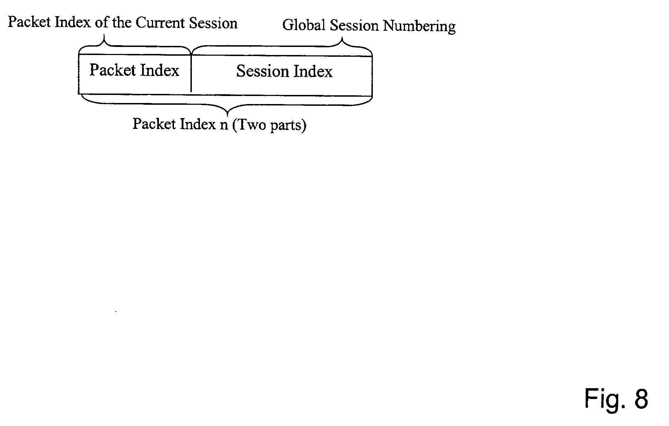

The UE keeps receiving the download session with checking the received packet index, reassembles the order of packets with respect to the received indexes. If the number of received packets is the same as the number indicated in the final packet labeled by the EOS signal in the session status field (s=1), the whole sequence of the packets in the current session is successfully downloaded. Where in Figure 7, the OGS (s=0) shows the current received packet is ongoing session broadcast; the EOS signal shows the end of session. The packet index is a number composed of hierarchical two-level codes, a local packet index and a global session number. Its structure is depicted in figure 8.

The OGS and EOS signal helps the UE to judge whether it has successfully downloaded the current session. The session status field needs only one bit. Another alternative way of indicating the end of the session is to broadcast the total number of packets for the current download session in the low data rate control channel, i.e. the SCC channel.

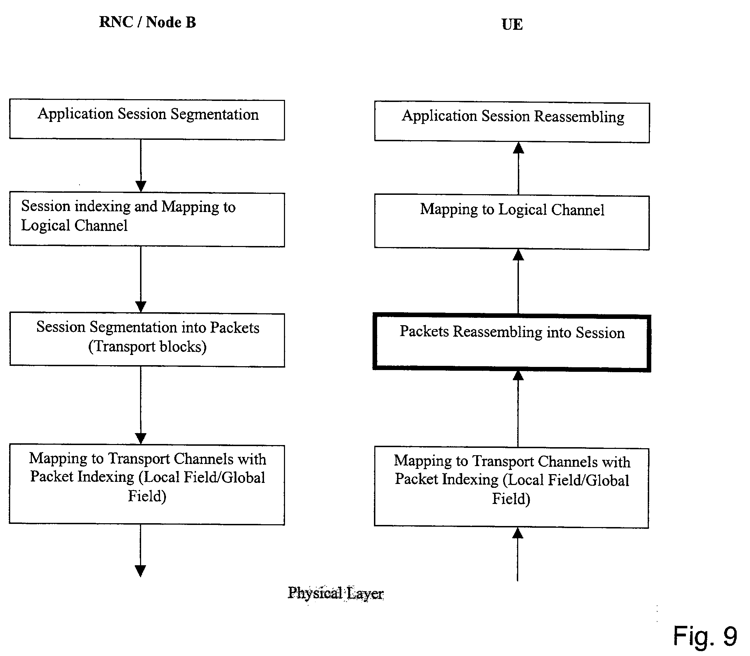

The number as shown in figure 8 can be seen as the absolute packet index. The reason to have an absolute packet index is to avoid the overlaps if two packets with the same relative packet number but belonging to different sessions are received. The protocol stacks in the RNC (Radio Network Controller) and the UE must support this approach. A new logical channel called SDC (software data channel) should be established in the radio access network in order to handle the download traffic for addressing many users. For instance, a third common physical channel could be established in UMTS/FDD to carry this logical channel. As shown in figure 9, the Radio network controller (RNC) has the responsibility to organize the labeling for download traffic; the UE reassembles the received packets into a complete session. In case the download phase by means of repetition is finished and the user has not completed the download, he should apply for the dedicated radio resource. The bold block in figure 9 is an important point of the invention, which enables the UE to complete the broadcast information. The download session can be received during different cell affiliations, i.e., due to handover. During the lifetime of a broadcast session, fragments of the session are received.

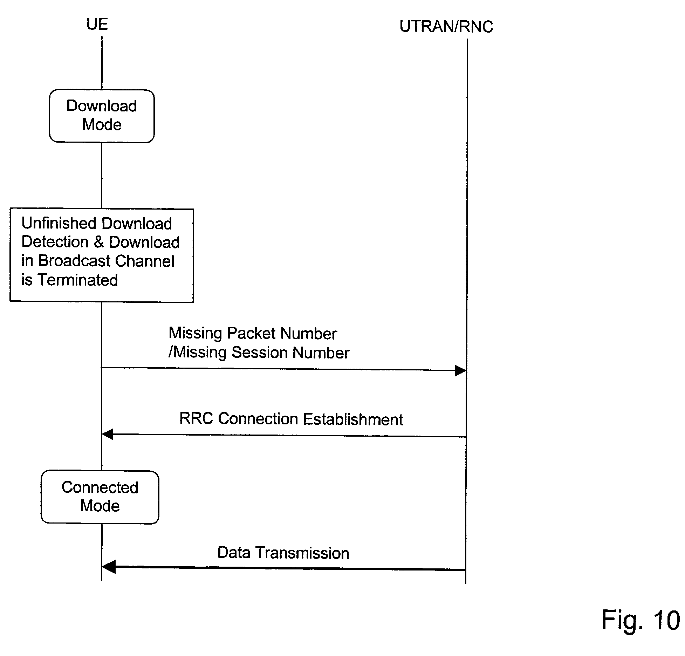

A simplified MSC chart between the UE and network in case the mode jumps from download mode to the connected mode is shown in figure 10.

### Alternative 1:

The terminologies introduces previously is only to build up the concept of software download using a packet indexing scheme. The similar functionality can be realized by upgrading available control channels, e.g. forward access channels (FACH) indicated by the broadcast control channel. There are many alternative ways to fulfill the requirement of software download; e.g. the UE can determine the session is finished by observing the event when the repetition field is decreased by one. In this case, we do not need the EOS and OGS. However, the probability of successful judgment of finished downloads is lower. The following figure shows the worst case when an error occurs.

The most important information should be carried out by the air interface. The packet-indexing scheme can be realized alternatively. There are still number of alternative means to inform the UE how many packets the session has, e.g.:

### Alternative 2:

Total packet number N can be broadcast by the periodic SCC channel. In this case the session status field is not needed. However, SDC channel cannot work independently from the SCC channel.

### Alternative 3:

Total packet number N can be carried in each transport block in SDC channel. In this case it looses spectrum efficiency, if N is large.

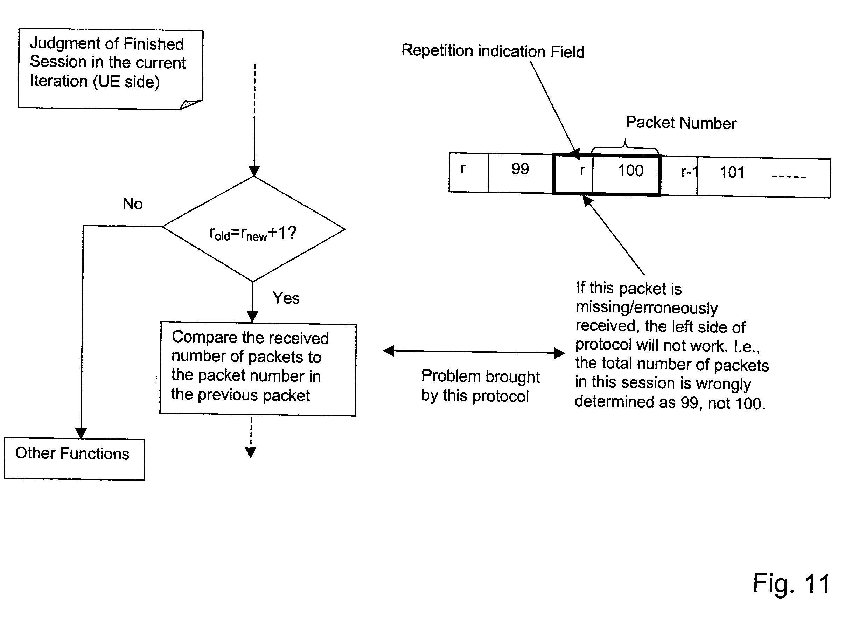

The novelties of the invention are listed in the following:
a. Introduction of download session repetition using common channels (e.g. broadcast). The packet indexing scheme enhances its performance.
   It mainly resolves the unfinished download problem due to handover and radio bearer service selection.
   - In case the UE changes its affiliation from a Node B to the other cell where both cells are repeatedly broadcasting the download stream. The UE can selectively receive the missing part of a session.
   - In case the bearer service has been changed for the UE, e.g. due to interference reason, in case when the download channel is changed form broadcast channel to dedicated channel, the UE still can apply for the missing packets to complete the unfinished download. A table of missing packet is sent to the network after the broadcast session.
   - Furthermore, in a multi-download-service type scenario, i.e., when different cells are broadcasting different sessions, UE can select the right session thanks to the session differentiation enhanced by session index.
   - One realization of combining the session status field and packet index is introduced. It brings the advantage of increasing probability of correctly decoding the whole packet number for a download session, as shown in figure 11.
b. It introduces a frame structure for the software download channels, i.e. software download control channel (SCC) in parallel with data channel (SDC) is shown in Figure 4, where the session repetition indication field carries the current repetition number of inexplicitly showing how many repetitions are left. Based on this value, the UE abandons the software download mode, if there is no chance to finish the download via common channels.
c. A new download terminal state (mode) is introduced and following novelties are evident:
   - Interworking between control information and the data channel broadcast with a time shift (delay time) to increase the finished download probability
   - Terminal based decision to abandon the download state, if already succesfully completed the download or if no further chance exist to complete by broadcast session.
d. An important novelty belong to c should be emphasized. As shown in Figure 10, in case the UE jumps from download mode to connected mode during its download process, it should submit the missing packet numbers and related session number in the reverse link to the network.

5. Since the packet indexing approach can be independently implemented in different cells, it can be also independently implemented with respect to the cell-grouping approach. The idea if introducing the control information telling the current download status in order to page the software download user is not only limited in the UMTS/FDD system. In any system where the push service is applied it can be implemented.

## Claims

1. Method for software downloads in a radio communications system, wherein
a user equipment (UE) changes ist affiliation from a first base station (Node B) to a second base station (Node B) and selectively receives the missing part of a session from the base stations (Node B) repeatedly broadcasting a download stream.

2. Method according to claim 1, wherein
in case the bearer service has been changed for the user equipment (UE) or in case when the download channel is changed form broadcast channel to dedicated channel, the user equipment (UE) still can apply for the missing packets to complete the unfinished download by sendeing a table of missing packet to the network after the broadcast session.

3. Method according to claim 1 or 2, wherein
in a multi-download-service type scenario, i.e. when different cells are broadcasting different sessions, the user equipment (UE) selects the right session by means of the session differentiation enhanced by session index.

4. Method according to one of the previous claims, wherein the session status field and the packet index are combined.
